# EUROPEAN PATENT APPLICATION

(11) **EP 1 632 522 A1**
(43) Date of publication of application: **08.03.2006**
(21) Application number: 05107856.6
(22) Date of filing: 26.08.2005
(51) Int. Cl.: C08J 3/215, C08K 3/04, C08J 3/12, C08J 3/22

(54) **Pelletized fluffy carbon black composite, preparation of rubber composition thereof and article of manufacture**

(30) Priority: 02.09.2004 US 606763 P
(71) Applicant: THE GOODYEAR TIRE & RUBBER COMPANY, Akron, Ohio 44316-0001 (US)
(72) Inventor: Agostini, Giorgio, L-7733, Colmar-Berg (LU)
(74) Representative: Kutsch, Bernd

(57) **Abstract**

This invention relates to preparation and use of a pelletized composite comprising a dispersion of fluffy (low apparent density) carbon black aggregates in a conjugated diene-based elastomer binder therefor instead of a non-elastomeric polymeric binder. Such composite is prepared by blending non-pelletized, fluffy rubber reinforcing carbon black aggregates with an aqueous dispersion or organic solvent solution of at least one conjugated diene-based elastomer, drying the mixture to form a composite thereof and pelletizing the composite. The resultant pelletized composite desirably contains a relatively high carbon black concentration, desirably is free-flowing, and thereby in a form of a deliverable particulate carbon black for blending with at least one other elastomer, and suitable rubber compounding ingredients, to form a rubber composition which may be used to form various carbon black reinforced rubber products as components of articles of manufacture. Such article of manufacture may be, for example, a tire. Such article may also be an industrial product such as, for example, a hose or belt such as a conveyor belt or power transmission belt.

## Description

### Field of the Invention

This invention relates to preparation and use of a pelletized composite comprising a dispersion of fluffy (low apparent density) carbon black aggregates in a conjugated diene-based elastomer binder therefor instead of a non-elastomeric polymeric binder. Such composite is prepared by blending non-pelletized, fluffy rubber reinforcing carbon black aggregates with an aqueous dispersion or organic solvent solution of at least one conjugated diene-based elastomer, drying the mixture to form a composite thereof and pelletizing the composite. The resultant pelletized composite desirably contains a relatively high carbon black concentration, desirably is free-flowing, and thereby in a form of a deliverable particulate carbon black for blending with at least one other elastomer, and suitable rubber compounding ingredients, to form a rubber composition which may be used to form various carbon black reinforced rubber products as components of articles of manufacture. Such article of manufacture may be, for example, a tire. Such article may also be an industrial product such as, for example, a hose or belt such as a conveyor belt or power transmission belt.

### Background of the Invention

Rubber reinforcing carbon black is often used to reinforce various rubber compositions.

Rubber reinforcing carbon black is typically manufactured by fuming carbon black under controlled conditions at a significantly elevated temperature to form carbon black aggregates in an uncompacted form of very small particle size which, while having a specific gravity in a range of from 1.6 to 1.9, depending upon the carbon black grade, but because the carbon black aggregates are separated by a significant amount of empty space (voids), they have a very low apparent density in a range, for example, from 100 to 250 kg/m³, and have an appearance of being relatively fluffy in nature and are therefore referred to herein as being "fluffy".

Such fluffy carbon black aggregates, probably because of their very low apparent density and small particle size, are very dusty in nature and present associated handling problems in an industrial environment for manufacturing carbon black reinforced rubber products.

Accordingly, in order to make such fluffy carbon black aggregates transportable and useable in a form of a non-dusting material, binder materials are conventionally used to glue the carbon blacks together and to therefore significantly reduce the amount of empty space between the carbon black aggregates the composite of carbon black aggregates and binder material is converted to a free flowing pelletized form is pelletized to promote the transportability of the composite. The apparent density of the carbon back aggregates is thereby increased to perhaps an apparent density in a range, for example, of 270 to 600 kg/m³, depending somewhat upon the choice of carbon black type, because the voids between the carbon black aggregates are filled with the binder material.

The binder material interacts with the surface of the carbon black aggregates, binds the carbon black aggregates together and provides a degree of hardness to the pellets.

Typical binder materials are non-elastomeric, polymeric materials such as, for example, molasses, soluble cellulose, methyl cellulose and soluble starch materials.

Intuitively, it is necessary that the pellets are broken down during high shear mixing of rubber compositions which contain the pellets in order to provide carbon black reinforcement for the rubber composition itself. However, this process is relatively inefficient and conventionally the pellets break down to fragments of various sizes with only a fraction being broken entirely down to into the original fluffy carbon black aggregate state, or form.

In addition, the surface of the carbon black aggregates are contaminated with the binder material which is typically polar in nature and therefore typically not very compatible with general purpose (GP) elastomers such as, for example, cis 1,4-polyisoprene, cis 1,4-polybutadiene and styrene/butadiene copolymer rubbers which does detracts from and does particularly aid in promoting the fragmentation and dispersion of the carbon black aggregates in such elastomers.

However, it is desired herein to more effectively provide, transport and deliver carbon black aggregates for reinforcement of conjugated diene-based elastomers and particularly elastomers such as, for example, cis 1,4-polyisoprene, cis 1,4-polybutadiene and styrene/butadiene rubbers.

For this invention, it is proposed to provide carbon black aggregates in a form of pellets of a composite comprised of a high concentration of carbon black aggregates in a conjugated diene-based elastomer such as for example, cis 1,4-polyisoprene, cis 1,4-polybutadiene and/or styrene/butadiene copolymer rubbers which is believed to be a significant departure from the aforesaid past practice by both providing the formative pelletized carbon black aggregates in the elastomer binder and by providing a carbon black reinforced conjugated diene-based elastomer composition which is created by blending the pelletized carbon black aggregates under high shear conditions with the conjugated diene-based elastomer(s).

In such manner, the classical, typically polar, binder material is replaced with a conjugated diene-based elastomer which is significantly more compatible with the diene-based elastomer with which it is being mixed.

Moreover, the formative composite preparation and pelletization thereof creates a composite of the fluffy carbon black aggregates by filling in the voids between the carbon black aggregates, thereby increasing their apparent density, with a conjugated diene-based elastomer which typically has a relatively high level of compatibility with conjugated diene-based elastomers, particularly under high shear mixing conditions.

Therefore, even if the pelletized composite should happen to only relatively inefficiently break down during such higher shear mixing into smaller particles of various sizes, the carbon aggregate reinforcement in contact with the conjugated diene-based elastomer binder and therefore remains available to provide effective carbon black reinforcement for the conjugated diene-based elastomer composition in a form of primary carbon black aggregates similar to the original fluffy carbon black aggregates.

Further, such fragments of the composite is provided within the conjugated diene-based elastomer host with which the composite is mixed under high shear conditions in the absence, or exclusive, of the aforesaid foreign material as the aforesaid polar non-elastomer, polymeric binder material which itself, would otherwise tend to inhibit the compatibility with the conjugated diene-based elastomer host.

In this manner then, is envisioned a more efficient manufacturing of rubber products which contain at least one component of a rubber composition which contains a conjugated diene-based elastomer.

It might be mentioned, that heretofore, preparation of various rubber compositions has been suggested such as, for example, by:
(A) first masterbatching various rubber latices with various rubber compounding ingredients which have particularly included rubber reinforcing carbon black under low shear and temperatures followed by
(B) blending the masterbatch with additional elastomer(s) and compounding ingredients under high shear and temperature conditions.

US-A- 3,317,458 relates to masterbatching a combination of carbon black and silica with a rubber latex.

Various rubber compositions have also heretofore been prepared by mixing an aqueous slurry of carbon black with an organic solvent solution of elastomer(s). For example see US-A- 3,350,342.

US-A- 3,304,281 relates to mixing together a solution of one polymer with a latex of another polymer and then coagulating the rubber crumb from the resulting mixture.

US-A- 3,491,052 relates to mixing an elastomer in an aqueous latex form with a solution of an elastomer which has been dissolved in a water immiscible organic solvent to form a pseudo-emulsion and recovering the mixed elastomers by adding a latex coagulating agent at a temperature sufficient to vaporize the solvent.

US-A- 3,533,988 relates to blending a hydrocarbon solution of rubber with an aqueous suspension of a rubber reinforcing agent, such as carbon black.

US-A- 6,232,389 relates to preparation of rubber compositions by mixing various rubber compounding ingredients, including carbon black, with elastomers in an aqueous or solvent solution, recovering the mixture and preparing articles of manufacture therewith.

However, it is not seen that any of such revelations teach or suggest the preparation of deliverable pelletized composites of a high concentration of carbon black aggregates in a form of a pelletized composite with a conjugated diene-based elastomeric binder, to the exclusion of a non-elastomer polymeric binder (a non-elastomer polymeric binder being considered herein as a contaminate, particularly in a rubber composition which contains carbon black reinforcing filler derived from a carbon black/non-elastomeric polymeric binder), and the preparation of rubber compositions with such deliverable pellets.

In the description of this invention, the term "phr" relates to parts by weight of an ingredient per 100 parts by weight of rubber.

The terms "rubber" and "elastomer" may be used interchangeably unless otherwise indicated.

The term "fluffy" rubber reinforcing carbon black aggregates, as used herein, means such fluffy carbon black aggregates in an uncompacted form, typically with an apparent density in range, for example, of from 100 to 250 kg/m³.

The term "apparent density" as used herein means the ratio of the carbon black weight that fills a volume of one cubic meter (m³) according to ASTM D1513 Test Method for Carbon Black Pellet Pour Density.

The term "specific gravity" if used herein means the true carbon black material specific gravity according to ASTM D792-55 Test Method.

### Disclosure and Practice of the Invention

In accordance with this invention, a process of preparing a (deliverable) pelletized particulate carbon black/elastomer composite comprised of a dispersion of fluffy carbon black aggregates in a conjugated diene-based elastomer binder therefor, exclusive of non-elastomer polymeric binder therefore (e.g. for example, molasses, cellulose and/or starch) wherein said process comprises:
(A) forming a composite of an elastomer containing a dispersion therein of fluffy carbon black aggregates, exclusive of pelletized carbon black (particularly exclusive of pelletized carbon black containing a non-elastomer polymeric binder) by a method which comprises:
   (1) blending fluffy rubber reinforcing carbon black aggregates having an apparent density in a range of from 100 to 250 kg/m³ with an aqueous emulsion of conjugated diene-based elastomer particles, followed by removing the water therefrom to recover a composite comprised of a dispersion of said fluffy carbon black aggregates in said conjugated diene-based elastomer, or
   (2) blending fluffy rubber reinforcing carbon black aggregates having an apparent density in a range of from 100 to 250 kg/m³ with an organic solvent solution of a conjugated diene-based elastomer, followed by removing the solvent therefrom to recover a composite comprised of a dispersion of said fluffy carbon black aggregates in said conjugated diene-based elastomer; wherein:
      (i) said fluffy carbon black aggregates are blended with said aqueous emulsion or solvent solution of conjugated diene-based elastomer in a form of:
         (a) said fluffy rubber reinforcing carbon black aggregates exclusive of an aqueous dispersion of said fluffy carbon black aggregates, or
         (b) said fluffy rubber reinforcing carbon black aggregates exclusive of an organic solvent dispersion of said fluffy carbon black aggregates, or wherein
      (ii) an organic solvent solution or aqueous emulsion of conjugated diene-based elastomer is sprayed onto said fluffy carbon black aggregates from which the composite thereof is recovered by removing the solvent; followed by
(B) pelletizing said resultant composite to form the said pelletized fluffy carbon black/elastomer composite, preferably in a free flowing form.

Preferably the said dispersed carbon black aggregates of the resulting composite have an apparent density in a range of from 100 to 250 kg/m³.

In further accordance with this invention, a pelletized fluffy carbon black/elastomer composite is provided wherein said fluffy carbon black/elastomer composite comprises a dispersion of fluffy rubber reinforcing carbon black aggregates in a conjugated diene-based elastomer binder therefor, to the exclusion of a non-elastomer polymeric binder (and particularly to the exclusion of at least one of molasses, cellulose and starch);
wherein said pelletized fluffy carbon black/elastomer composite comprises, based upon percent by weight of said composite:
(A) 60 to 99 weight percent of said fluffy carbon black aggregates, and
(B) 40 to 1 weight percent of said conjugated diene-based elastomer.

Preferably, said fluffy rubber carbon black aggregates used in said composite have an original apparent density in a range of from 100 to 250 kg/m³.

In practice, said fluffy carbon black/elastomer composite pellets are preferably primarily of a generally cylindrical shape with an average length in a range of from 0.1 to 10 millimeters (mm) and an average aspect ratio (length/diameter ratio) in a range of from 1/1 to 3/1.

In additional accordance with this invention, a pelletized composite is provided comprising a dispersion of said fluffy rubber reinforcing carbon black aggregates in a conjugated diene-based elastomer binder therefor prepared by the process of this invention.

In further accordance with this invention, the process of this invention additionally comprises blending said pellets of said fluffy carbon black/elastomer composite and at least one additional conjugated diene-based elastomer under high shear mixing conditions sufficient to fragmentize said pelletized composite which comprises blending:
(A) at least one conjugated diene-based elastomer selected from polymers of at least one of isoprene and 1,3-butadiene and copolymers of styrene and at least one of isoprene and 1,3-butadiene (in addition to said conjugated diene-based binder in said pelletized carbon black/elastomer composite), and
(B) particulate reinforcing filler for said conjugated diene-based elastomer(s), preferably in an amount of from zero to 200, alternately from 5 to 120, phr (parts by weight per 100 parts by weight rubber, including said conjugated diene-based rubber of said pellets of said fluffy carbon black/elastomer composite) comprising:
   (1) rubber reinforcing carbon black aggregates, or
   (2) synthetic amorphous precipitated silica, or
   (3) from 5 to 195 phr of rubber reinforcing carbon black aggregates, and from 5 to 195 phr of synthetic amorphous precipitated silica;
      wherein said rubber reinforcing carbon black aggregates are provided as:
   (4) pellets of a said composite of said dispersion of fluffy carbon black aggregates in said conjugated diene elastomer binder, or
   (5) from 5 to 195 weight percent of pellets of said

composite of said dispersion of fluffy carbon black aggregates in said conjugated diene elastomer binder and from 5 to 195 weight percent of pellets of a dispersion of carbon black aggregates in a non-elastomeric polymeric binder therefor (e.g. non-elastomeric polymeric binder comprised of at least one of molasses, cellulose and starch).

In additional accordance with this invention an article of manufacture is provided having a component comprised of said rubber composition and particularly a rubber composition prepared by the process of this invention.

In further accordance with this invention, said article of manufacture is, for example, a tire or an industrial product such as, for example a hose or belt such as, for example a conveyor belt or power transmission belt.

In additional accordance with this invention a tire is provided having a component comprising the rubber composition of this invention and particularly of a rubber composition prepared by the process of this invention.

In further accordance with this invention a tire is provided having a tread comprising the rubber composition of this invention and particularly prepared by the process of this invention.

A significant aspect preparation of the pelletized composite of conjugated diene-based elastomer bound fluffy carbon black aggregates is to provide a desired conjugated diene-based elastomer in direct initial contact with the fluffy rubber reinforcing carbon black in the form of a composite thereof, and particularly in a form of a free-flowing (thereby deliverable to the rubber-blending manufacturing process) pellets of said composite instead of an inert non-elastomer material such as, for example, the aforesaid molasses.

This is considered herein to be significant:
(A) to develop an initial affinity of the fluffy carbon black aggregates with a conjugated diene-based elastomer to especially promote its carbon black reinforcement;
(B) to present the rubber reinforcing carbon black in is highest state of dispersability, namely in its fluffy carbon black aggregate form, and therefore in its highest state of rubber reinforcing potential;
(C) promote a highest state of reinforcing carbon black/elastomer interaction;
(D) promote increased carbon black-bound rubber;
(E) reduce potential contamination of the reinforcing carbon black surface with binders other than the elastomer binder of choice;
(F) promote a reduction in strain/stress softening of the associated elastomer and consequent reduction in breakdown of desirable carbon black/carbon black reinforcement interaction to thereby promote better, or more efficient, elastomer reinforcement;
(G) enable a potential reduction in reinforcing carbon black content in a respective rubber composition, and resulting component of an article of manufacture as result of the aforesaid higher rubber reinforcing potential;
(H) potential ability to use a less expensive grade of rubber reinforcing carbon black and thereby reduce the cost of a respective rubber composition and resulting component of an article of manufacture.

Therefore, a significant aspect of the invention is to isolate the original fluffy primary carbon black aggregates by the conjugated diene-based elastomer instead of by somewhat compacting them by more simply filling its voids with a non-elastomer polymeric filler to present relatively incompatible material with the pellets to the conjugated diene-based elastomer rubber composition for which it is desired to provide more effective carbon black reinforcement.

Accordingly, it is considered herein that the fluffy carbon black aggregates contained in the pelletized form remain in their originally fluffy state even though the voids (open spaces) contained in the fluffy carbon black aggregates are filled with the conjugated diene-based elastomer.

This is because the conjugated diene-based elastomer of the fluffy carbon black/elastomer composite is similar in nature and therefore tends to be compatible with the conjugated diene-based elastomer of the rubber composition with which the pellets are mixed so that the resulting carbon black reinforcement of the rubber composition is substantially provided in a manner similar to the fluffy carbon black aggregates being mixed directly with the conjugated diene-based elastomer containing rubber composition.

In one aspect of a practice of the invention, said organic solvent solution of elastomer(s) may be composed of at a plurality of least two individual organic solvent solutions of elastomers
(A) which are used independently for addition to said fluffy carbon black aggregate filler, or
(B) which are pre-blended prior to addition to said fluffy carbon black aggregate filler, or
(C) which at least one of said organic solvent elastomer solutions is blended with at least one additional organic solvent elastomer solution subsequent to said addition to the fluffy carbon black aggregate filler thereto, or
(D) which at least one of said organic solvent elastomer solutions is blended with at least one additional organic solvent elastomer solution substantially simultaneously to said fluffy carbon black aggregate filler addition.

In one aspect of the invention, the said organic solvent solution of at least one elastomer may be a polymerizate (an elastomer together with its solvent in which it has been prepared by polymerization reaction of an appropriate monomer in the presence of a catalyst which might sometimes referred to as a cement).

Representative examples of various rubber reinforcing carbon blacks are reported in The Vanderbilt Rubber Handbook, 13th Edition, 1990, Page 417. It is to be appreciated that reported carbon blacks are in a pelletized form using the aforesaid classical binders (e.g. molasses, etc).

In practice, a significant aspect of this invention is that the fluffy carbon black aggregates can be blended in their low apparent density state (without being physically compacted to a higher density state) with an aqueous emulsion or organic solvent solution of a conjugated diene-based elastomer and the recovered fluffy carbon black-based composite pelletized directly at the carbon black manufacturing plant without incurring a compacting of the carbon black into a pelletized form. For example, the blending of the fluffy carbon black and elastomer emulsion or solution can be performed at the pelletizer stage in which the medium hot fluffy carbon black aggregates (from their own manufacturing process) are sprayed with the elastomer emulsion or solution, in place of a classical starch or molasses solution, to both form and pelletize the fluffy carbon black composite. In this manner then, the fluffy carbon black is compacted in a deliverable form, with its elastomer binder, which can be advantageously shipped, or otherwise transported, to end user (deliverable to rubber compounding process for mixing with other elastomers and suitable rubber compounding ingredients in various rubber article manufacturing plants such as, for example, tire manufacturing plants).

An aspect of the fluffy carbon black/elastomer binder composite preparation process of this invention has a particular advantage in that:
(A) the hot fluffy carbon black aggregates exiting from the carbon black manufacturing process at the carbon black manufacturing site (in which the carbon black aggregates are typically prepared by an elevated temperature carbon fuming process to product a carbon soot so that the immediately prepared carbon black aggregates are state of being hot) will readily interact with the spraying of the elastomer emulsion or solution to thereby improve the such interaction as compared to simple mixing of cold (e.g. room temperature of about 23°C) carbon black aggregates with the elastomer emulsion or solution, and
(B) the spraying of elastomer emulsion or solution onto the hot carbon black aggregates will cool the hot fluffy carbon black aggregates with the resultant heat transfer thereby promoting a drying of the resulting carbon black/elastomer composite by driving off most of the water (of the elastomer emulsion) or solvent (of the elastomer solution).

Additional advantages of the process are:
(A) the elastomer in an aqueous emulsion or organic solvent solution thereof is at a very high, and possibly its highest possible, dispersion state, and
(B) the fluffy carbon black aggregates are also at a very high, and perhaps their highest, dispersion state, namely, as non-compacted carbon black aggregates.

Consequently, it is considered herein that a composite is provided composed of an enhanced uniformity of dispersion of a high concentration (at least 60 weight percent) of the fluffy carbon black aggregates in an elastomeric binder in a free-flowing deliverable (e.g. deliverable to a rubber compounding process for mixing other elastomers and suitable rubber compounding ingredients) pelletized form.

In the practice of the invention, the elastomer binder for the pelletized composite of carbon black aggregates may be various conjugated diene-based elastomers selected from, for example, at least one of elastomeric polymers of at least one of isoprene and 1,3-butadiene and copolymers of styrene and at least one of isoprene and 1,3-butadiene monomers.

Representative of such elastomers are, for example cis 1,4-polyisoprene, 1,3-butadiene, styrene/butadiene copolymers, isoprene/ butadiene copolymers, styrene/isoprene/butadiene copolymers and any functionalized versions of such elastomers.

Various organic solvents may be used for process step of this invention. Representative of such solvents are, for example, hexane, benzene, toluene, cyclohexane, heptane, and tetrahydrofuran. Preferred solvents are, for example, hexane, cyclohexane and heptane.

Various rubber compositions may be prepared by blending the said pelletized composite of particulate fluffy carbon black aggregates with the elastomeric binder with various sulfur vulcanizable elastomers and/or additional rubber compounding ingredients by compounding by methods generally known in the rubber compounding art, such as mixing in an internal rubber mixer with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Typical amounts of tackifier resins, if used, may comprise 0.5 to 10 phr, usually 1 to 5 phr. Typical amounts of processing aids may comprise 1 to 10 phr, if used. Such processing aids can include, for example, aromatic, naphthenic, and/or paraffinic processing oils. Representative silicas may be, for example, hydrated amorphous silicas. Typical amounts of antioxidants comprise 1 to 3 phr. Representative antioxidants may be, for example, diphenyl-p-phenylenediamine. Typical amounts of antiozonants for the sidewall composition may comprise 3 to 6 phr. Typical amounts of fatty acids, if used, which can include stearic acid comprise 0.5 to 3 phr. Typical amounts of zinc oxide comprise 2 to 6 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr.

Accelerators, including primary and optionally secondary accelerators, are used to control the time and/or temperature required for vulcanization and to improve the properties of the vulcanizate. Often accelerators are used in an amount ranging from 0.5 to 2.0 phr. Such accelerators may be, for example, various amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

Sometimes a combination of antioxidants, antiozonants and waxes may be collectively referred to as "antidegradants".

In practice, the recovered polymer composite may be used as a component of an article of manufacture such as, for example, a component of a tire and/or industrial product. Such tire component may be, for example, a tire tread, sidewall, apex or other sidewall insert, or wire coat compound. Such industrial product may be, for example and without limitation, a hose, conveyor belt or power transmission belt.

## Claims

1. A process of preparing a pelletized particulate carbon black/elastomer composite comprising a dispersion of fluffy carbon black aggregates in a conjugated diene-based elastomer binder therefor, exclusive of non-elastomer polymeric binder therefore, wherein said process comprises:
(A) forming a composite of an elastomer containing a dispersion therein of fluffy carbon black aggregates, exclusive of pelletized carbon black by a method which comprises:
(1) blending fluffy rubber reinforcing carbon black aggregates having an apparent density in a range of from 100 to 250 kg/m³ with an aqueous emulsion of conjugated diene-based elastomer particles, followed by removing the water therefrom to recover a composite comprised of a dispersion of said fluffy carbon black aggregates in said conjugated diene-based elastomer, or
(2) blending fluffy rubber reinforcing carbon black aggregates having an apparent density in a range of from 100 to 250 kg/m³ with an organic solvent solution of a conjugated diene-based elastomer, followed by removing the solvent therefrom to recover a composite comprised of a dispersion of said fluffy carbon black aggregates in said conjugated diene-based elastomer;
wherein:
(i) said fluffy carbon black aggregates are blended with said aqueous emulsion or solvent solution of conjugated diene-based elastomer in a form of:
(a) said fluffy rubber reinforcing carbon black aggregates exclusive of an aqueous dispersion of said fluffy carbon black aggregates, or
(b) said fluffy rubber reinforcing carbon black aggregates exclusive of an organic solvent dispersion of said fluffy carbon black aggregates, or wherein
(ii) an organic solvent solution or aqueous emulsion of conjugated diene-based elastomer is sprayed onto said fluffy carbon black aggregates from which the composite thereof is recovered by removing the solvent; followed by
(B) pelletizing said resultant composite to form the said pelletized fluffy carbon black/elastomer composite.

2. The process of claim 1, wherein said fluffy carbon black/elastomer composite is prepared by blending fluffy rubber reinforcing carbon black aggregates having an apparent density in a range of from 100 to 250 kg/m³ with an aqueous emulsion of conjugated diene-based elastomer particles, followed by removing the water therefrom to recover a composite comprised of a dispersion of said fluffy carbon black aggregates in said conjugated diene-based elastomer.

3. The process of claim 1, wherein said fluffy carbon black/elastomer composite is prepared by blending fluffy rubber reinforcing carbon black aggregates having an apparent density in a range of from 100 to 250 kg/m³ with an organic solvent solution of conjugated diene-based elastomer particles, followed by removing the solvent therefrom to recover a composite comprised of a dispersion of said fluffy carbon black aggregates in said conjugated diene-based elastomer.

4. The process of any of the preceding claims, wherein said fluffy carbon black/elastomer composite pellets are of a generally cylindrical shape with an average length in a range of from 0.1 to 10 millimeters (mm) and an average aspect ratio (length/diameter ratio) in a range of from 1/1 to 3/1.

5. The process of any of the preceding claims, wherein said pelletized fluffy carbon black/elastomer composite comprises, based upon percent by weight of said composite:
(A) from 60 to 99 weight percent of said fluffy carbon black aggregates, and
(B) from 40 to 1 weight percent of said conjugated diene-based elastomer.

6. The process of claim 1, wherein said process additionally comprises preparing a rubber composition by blending said pellets of said fluffy carbon black/elastomer composite and at least one additional conjugated diene-based elastomer under high shear mixing conditions sufficient to fragmentize said pelletized composite which comprises blending:
(A) at least one conjugated diene-based elastomer selected from polymers of at least one of isoprene and 1,3-butadiene and copolymers of styrene and at least one of isoprene and 1,3-butadiene, in addition to said conjugated diene-based binder in said pelletized fluffy carbon black/elastomer composite, and
(B) particulate reinforcing filler for said conjugated diene-based elastomer(s), preferably in an amount of from zero to 200 parts by weight per 100 parts by weight rubber, said rubber including said conjugated diene-based rubber of said pellets of said fluffy carbon black/elastomer composite comprising:
(1) rubber reinforcing carbon black aggregates, or
(2) synthetic amorphous precipitated silica, or
(3) from 5 to 195 phr of rubber reinforcing carbon black aggregates, and from 5 to 195 phr of synthetic amorphous precipitated silica;
wherein said rubber reinforcing carbon black aggregates are provided as:
(4) pellets of a said composite of said dispersion of fluffycarbon black aggregates in said conjugated diene elastomer binder, or
(5) from 5 to 195 weight percent of pellets of said composite of said dispersion of fluffy carbon black aggregates in said conjugated diene elastomer binder and from 5 to 195 weight percent of pellets of a dispersion of carbon black aggregates in a non-elastomeric polymeric binder therefor.

7. A pelletized fluffy carbon black/elastomer composite prepared by the process of any of the previous claims 1-5.

8. The pelletized fluffy carbon black elastomer composite of claim 7 comprising:
(A) from 60 to 99 weight percent of said fluffy carbon black aggregates, and
(B) from 40 to 1 weight percent of said conjugated diene-based elastomer.

9. A rubber composition prepared by the process of claim 6.

10. A tire having a component comprising a rubber composition prepared by the process of claim 6.
